# EUROPEAN PATENT APPLICATION

(11) **EP 3 173 396 A1**
(43) Date of publication of application: **31.05.2017**
(21) Application number: 16200157.2
(22) Date of filing: 26.08.2003
(51) Int. Cl.: C05C 1/00, C05C 9/00, C05C 3/00, C05D 5/00, C05F 5/00, C05C 9/02, C05D 9/02, C05F 11/00

(54) **METHOD FOR PREPARING HIGHLY EFFICIENT AND WEAKLY POLLUTING MANURE COMPOSITIONS FOR BIOLOGICAL AGRICULTURE**

(30) Priority: 31.03.2003 IT MI20030640
(62) Divisional of application: 03019242.1
(71) Applicant: Gruppo Mauro Saviola S.r.l., 46019 Viadana (MN) (IT)
(72) Inventor: BARGIACCHI, Enrica, 46019 Viadana (MN) (IT); COSTA, Gianluca, 46019 Viadana (MN) (IT); DELLA CROCE, Carlo, 46019 Viadana (MN) (IT); FOSCHI, Lara, 46019 Viadana (MN) (IT); PAMPANA, Silvia, 46019 Viadana (MN) (IT); MIELE, Sergio, 46019 Viadana (MN) (IT); RIZZI, Giuseppe, 46019 Viadana (MN) (IT)
(74) Representative: De Gregori, Antonella

(57) **Abstract**

A method for preparing a highly efficient and weakly polluting manure composition for biologic agriculture comprising the mixing of an organic extract with a manure compound, wherein said manure compound is a manure compound comprising microelements and a method for improving the nourishing of plants and composition of the biomass thereof, said method comprising the steps of providing an organic extract and applying it to the ground.

## Description

### BACKGROUND OF THE INVENTION

The present invention relates to a method for using organic extracts from aqueous wood leaching processes for preparing organic acidifying solutions and highly efficient and weakly polluting manure compounds for biological agriculture.

As is known, a very important component of vegetable biomasses is constituted by tannin, i.e. a set of phenol compounds which are very diffused in vegetables (such as pteridophytes, gymnosperms, angiosperms) and which are present in fruits, barks and, mainly, wood materials.

From a chemical standpoint, they have very complex structures and molecular weights from 500 to 3, 000.

Their classification is difficult because of a broad variability thereof however, on an universal scale, they can be included in two main classes, that is hydrolyzable tannins and condensates.

Hydrolyzable tannins are gallic acid esters (gallotannins) and elagic acid (elagictannins) compounds with a sugar material usually consisting of glucose and they can be hydrolyzed from acids or enzymes in monomeric products.

The condensate tannins, also called proantocyanidins or polyflavonoids (PA), comprise a set of polyhydroxyflavonol polymers with C-C bindings between the sub-units.

On the other hand, by better and deeply considering the structure of the above mentioned products, the above distinction tends to disappear, also considering that condensate tannins can contain gallic acid esterified to the 3-OH level of the C ring.

Actually the main characteristic affecting the properties of tannins seems to be an unique high local concentration of hydroxyl ortho-phenol assemblies.

Hydrolyzable tannins, in particular, are mainly associated with gallic or elagic acid derivatives.

In condensate tannins, on the other hand, (such procyanidins, prodelphinidins) the same function is provided by ring B phenol hydroxyls (also esterified gallate can have a contribute).

The related biologic activity of the above mentioned tannins appears to be bound, at least partially, to the molar contents of these ortho-phenol assemblies.

Their spatial concentration too is a further important parameter.

Generally, hydrolyzable tannins are biologic agents having a power, for unitary mass, which is greater than that of condensate tannins, and their capability of precipitating proteins is directly related to the galloyl group number.

This feature makes them suitable for forming large complex, mainly with proteins, but also with other macromolecules, such as cellulose and pectins.

Their non reversible protein reaction is very interesting, since it allows to precipitate proteins from solutions, thereby providing a base for an industrial use thereof as vegetable tannin elements.

The above mentioned non-tannin materials comprises sugars, mainly pentosanes (from 9 to 23%), such as xylose and ribose; oligosaccharides, and in particular xyloglucan, xylane and arabinogalactan; as well as hexosans (from 4 to 13%) such as mannan and hemicelluloses (arabogalactans, specially in conifers).

Other important components comprise organic acids, such as the following: acetic, oxalic, malic, tartaric, lactic, piruvic, glyceric, glycolic, citric and isocitric, ascorbic, oxalacetic, succinic acids and so on.

Urea is the nitrogenous manure which at present is the most used and diffused manure compound.

However, it has a low nitrogen absorption efficiency, in growing plants, because it, both in solid and liquid form, is subjected to great losses through the soil cultivation system, said losses depending, at first, on ammonia volatilization, and, secondly, an excessively quick nitrification of the ammonia compounds from urea degradation; actually, if said are not intercepted by the plants, they will be dissipated through soil gravitational waters to provide large polluting sources.

To improve the urea agronomic efficiency, several amendment technologic approaches have been already proposed for making this manure suitable, both in its solid and liquid form, with substances suitable to modify the releasing time thereof, or to enhance its agronomic efficiency.

In particular, an addition of nitrification inhibiting substances and ureasis preventing materials, or an embedding by sulphur or film forming substances of various sources has been already used.

Moreover, urea-phosphate based manures, an adduct between urea and phosphoric acid have been also provided with a delayed urea hydrolysis and a low phytotoxicity risk from free ammonia, due to the acid effect induced by the phosphoric acid component.

For preserving natural resources searches have also been promoted to found methods for preparing low nitrogen releasing fertilizing substances, made by a reaction of different nitrogenous manures with wood and paper industry derivatives.

In particular, a method for making N-lignine, with a N contents from 22 to 30%, obtained by an oxidative ammonization and subsequent neutralization by nitric acid, of lignosulphonate waste from the paper industry has been designed.

Microelements are diffused in a variable amount in agricultural soils.

A dynamic control of their absorption is tightly affected by the soil conditions (temperature, pH, organic substance contents, texture, microbic activity, hydric regimen, redox potential) and by the chemical patterns with which they are applied.

In this connection, for cationic microelements, such as iron, manganese, copper and zinc, several preparations have been already proposed, both containing different source organic substances and proper kelates and complex materials, to improve the thus processed microelement absorption by cultivations.

In particular, is already available on the market an organic-mineral manure NPK with mineral nitrogen and amine groups of biologic origin (for example, aminoacids from molassa and proteic hydrolized materials) in which, in addition to a mono and disaccharide component such as: glucose, fructose, galactose, xylose, saccharose and maltose, a series of microelements such as boron, copper, mangagese, zinc, iron, cobalt and molybden can also be present.

However, such a manure compound does not comprise tannin organic extracts or urea.

In this field is also well known a method for producing a "plant growth stimulating material" based on sugar or a sugar mixture (mannose, lactose, dextrose, aritrose, fructose, fucose, galactose, glucose, gulose, maltose, polysaccharides, raffinose, ribose, ribulose, rutinose, saccharose, stachyse, trealose, xylose, xylulose, adenose, amilose, arabinose; phosphorilates; deoxiribose, adonitol, galactitol, glucitol, maltitol, ribitol, sorbitol, xylitol and mixtures thereof), with a macronourishing component, such as, preferably, zinc, iron and manganese.

To achieve the above mentioned objects, it is also known to use molasses, corn syrup, yeast extracts, lignosulphonate materials, humic acids, and synthesis kelates.

In particular, a method for producing a product based on an energetic component of the "carbon/skeleton type" and a macronutrient component with at least a water soluble nitrogen or phosphor source is well known.

In this product, the NP concentrations of N and P are less than 0.625% by weight; the energetic component is present in a rate from about 0.625 to about 8.785% by weight, whereas, with respect to the cationic microelements, useful concentration only for copper (from 0.00025 to 0.0125% by weight of soluble Cu) are indicated.

With respect to the other microelements, concentrations from 0.1 - 3.0% (Fe); 0.08 - 3.0% (Mn); 0.1 - 3.0% (Zn) by weight are used.

However, organic extracts of tannin and non-tannin have never been used as components of the above mentioned mixture, whereas nitrogen concentrations less than 1% are always used.

In this respect a solid form composition based on at least two microelements, selected from the group of Cu, Mn, Zn, Co and Mo, which are added in the form of salts to a water soluble nitrogenous or nitrate material (salified with an element different from the added microelements) is also known.

To the above mentioned basic composition it is possible to add several organic binding materials, either of natural or synthetic origin, such as wheat bran and meal, sawdust, polysaccharides and their derivative materials, such as starch, starch derivatives, cellulose and cellulose derivatives, arginates, lactose, mannitol or sorbitol such as gellies, locust bean rubbers, polyethylene glycols and polyvinyl pirrolidone.

However, the use of organic extracts of tannin and non-tannin, or urea or iron in the above mentioned compositions has not provided.

In a recent time, has been experimentally demonstrated that tannins, because of their chemical structure, easily form complex with a lot of polivalent ions and in particular with iron.

This feature can assume a non negligible interest in the agronomic field.

In fact, Larix tannin has been already used for preparing soluble kelates such as iron, manganese and zinc.

The above kelates have been already studies as micronutritive fertilizers for appletrees and Ginkgo, and have provided interesting agronomic results.

### SUMMARY OF THE INVENTION

In a prior patent application, in the name of the same Applicant (Patent Application RE2001 00089 and published as IT 1318355), which is intended as herein included by reference, a method has for concentrating leached materials, including tannin and non tannin aqueous solutions with a ratio from 5 ÷ 0.6):1 and a variable dry contents from 3% to 50% has been disclosed, said aqueous solutions being further concentrated to dryness.

The presence, with tannin, of great amounts of non-tannin substances comprising compounds such as: sugars, organic acids, salts and microelements in a very acid environment (pH 3.0 ÷ 4.0), in addition to providing a low cost nutrient principle direct source, also allows to efficiently convey further fertilizing substances which can be added to the above mentioned organic extracts, said substances essentially comprising nitrogenous compounds and microelements, which will be defined in a more detailed manner hereinafter.

Moreover, the above mentioned organic extracts have a greatly acid pH which, upon repeated applications, modifies the ground or soil reaction, to prevent a progressive alkalinization thereof, susceptible to occur in repeated agricultural operations.

The following diagram illustrates, by way of an example, the response of a firm-sand soil (50 g) to the application of different doses of one of the organic extracts according to the invention.

### Correction of the soil pH

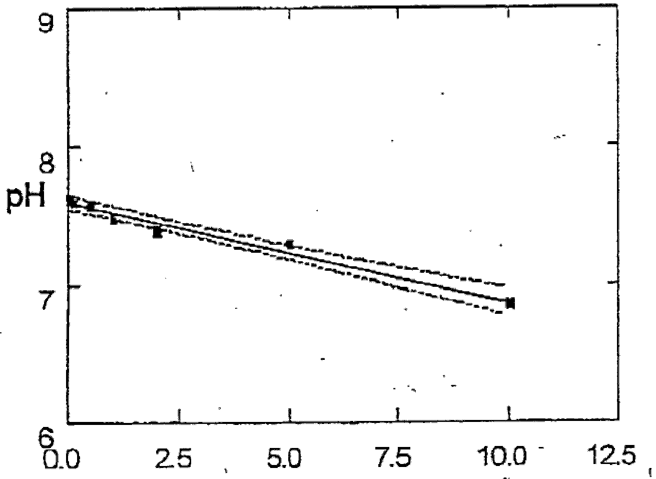

### Added amount (cc)

As they are added to water, even at a low concentration, the organic extracts according to the present invention reduce the solution pH toward an interesting acidity condition, as is shown in the test or experimental example shown in the following Table 1, in which, for the acidification, has been used an extract compound including 3% dry substances (s.s.).

**Table 1 - pH values detected or recorded on an organic extract at 3% s.s., according to the invention, and water dilutions thereof.**

| **PRODUCT** | **PH** |
|---|---|
| 3% s.s. organic extract held in a static condition | 3.505 |
| 3% s.s. organic extract held under stirring | 3.469 |
| Dilution water held in a static condition | 7.764 |
| Dilution water held under stirring | 7.776 |
| Extract: water, dilution 1:5 held under stirring | 4.044 |
| Extract: water, dilution 1:10 held under stirring | 4.478 |
| Extract: water, dilution 1:15 held under stirring | 5.010 |
| Extract: water, dilution 1:20 held under stirring | 5.525 |
| Extract: water, dilution 1:25 held under stirring | 5.877 |
| Extract: water, dilution 1:30 held under stirring | 6.095 |

In this connection, it should be apparent that the interest related to soil acidifying solutions and natural origin water is very great, since a broad range of agricultural applications tend, at present, toward biologic production methods, as defined by the CEE 2092/91 rules and subsequent modifications and integrations thereof.

The above mentioned methods prevent, a priori, mineral acids from being used: they tolerate, in some limited cases, an use of synthesis organic acids, such as citric acid, and admit, as a soil acidifying corrective compound only elementar sulphur or, water suspension thereof, provided that this is a product according to the 76/116/CEE rule, or the modified 89/284/CEE rule.

Moreover, the use of organic extracts according to the present invention allows to better control calcareous water (fert-irrigation), even away from a biological agriculture regimen, and of salt containing soils, both in a biologic regimen and in a conventional agriculture regimen, as it will be disclosed in a more detailed manner hereinafter.

In performing searches for providing highly agronomically efficient nitrogenous manure compounds, the Applicant has surprisingly found that the addition to the organic extracts according to the present invention of ammonia nitrogen (ammonium sulphate or nitrate) containing synthesis nitrogenous manure compounds, or an ureic (urea, urea formaldehyde polymers), even in combination manure compounds, and preferably containing solid urea or urea solutions or suspensions, provides the thus obtained manure compounds with a better agronomic performance or properties, i.e. a nitrogen agronomic efficiency better than that of a nitrogenous manure compound per se, and preferably than those of urea or water solutions or suspensions thereof.

An example of an organic extract which can be used for formulating a nitrogenous manure solution or suspension according to the present invention is hereinbelow indicated in Table 2.

**Table 2 - Characteristics of a tannin and non-tannin organic extract to be used according to the present invention for preparing nitrogenous manure solutions or suspensions, starting from urea.**

| **PARAMETER** | **u.m.** | **ANALYTIC DATA** | **Test Method** |
|---|---|---|---|
| **Baumé Density** | °Bè/15°C | 7.4 | NR LAB 006 |
| **Tannins** | % w/w | 5.2 | UNI 4632 NR LAB 001 |
| **Non-tannins** | % w/w | 6.5 | UNI 4632 NR LAB 001 |
| **Water** | % w/w | 88.3 | UNI 4632 NR LAB 001 |

| **Dry Substance** | % w/w | 11.7 | UNI 4632 NR LAB 007 |
|---|---|---|---|
| **Tannin/Non-tannin Ratio** | - | 0.8 | **AS CALCULATED** |
| **PH (6.9 Bè solution)** | - | 3.6 | LAB 004 NR |

Advantageously, to the inventive organic extracts a nitrogenous manure compound or solution or suspensions thereof are added, so that the sum of tannin and non-tannin concentrations in the thus obtained manure compound has a maximum value of 90% (w/w), whereas the nitrogen (N) concentration is in the 3 ÷ 45% (w/w) range.

The solid manure compounds according to the present invention are in turn obtained: (a) by mixing the nitrogenous component, preferably urea, with tannin and non-tannin organic extracts and with a subsequent optional drying in an air stream; (b) by embedding (coating) the nitrogenous component, preferably grain or prill urea, with dried organic extracts.

In the above cases, the making method can either comprise or not the use of a broad product range or series (such as urea-formaldehyde resins, animal gelly and so on) to favor the disclosed mixing and coating.

Advantageously, the manure compound or composition according to the present invention can comprise, in addition to nitrogen: vegetable nourishing raw elements such as phosphor and potassium; secondary elements such as calcium, magnesium and sulphur; microelements such as boron, cobalt, copper, iron, manganese, molybdenum, selenium and zinc.

All the above mentioned elements can be already present in the inventive organic extracts, or they can be added thereto, in several desired or set proportions, during their formulating or preparing operations.

It is also possible to convey the above mentioned microelements, that is boron, cobalt, copper, iron, manganese, molybdenum, selenium and zinc, to the inventive organic extracts, thereby providing a further embodiment of the invention.

To that end, it is possible to add the above mentioned microelements, or as metals per se, or as metal oxides, acids or salts.

Thus, the scope of the present invention will further include:
1. the use of tannin and non-tannin organic extracts, made by water leaching wood materials, and cold concentrating the leached substances thereby obtained, for preparing acidifying solutions for correcting pH and salinity of soil and water;
2. the use of tannin and non-tannin organic extracts for preparing highly efficient and weakly environmentally dangerous manure compounds which, in their different embodiments, can comprise: a) manure compounds containing nitrogen, preferably ureic nitrogen, both in solid and liquid form, even with an addition of other plant nourishing or nutrient elements; b) manure compounds comprising microelements, preferably cationic microelements, such as Cu, Fe, Mn and Zn, both in a solid and in a liquid form.

With respect to the prior art, the present invention provides, in particular, the following advantages.
- The inventive organic extracts are natural products, which are separated from wood by an ecological process which, without using solvents or other chemical substances, is contradistinguished by a high yield efficiency, while leaving unaltered the physical-chemical properties of the organic components (i.e. tannin and non-tannin substances).
- The organic extracts according to the present invention can be subjected to regular or normal degradation natural cycles as the lignocellulosic vegetable materials, and they contribute to forming humus.
- The addition to the inventive organic extracts, in an "as a prepared form" or in a dried form thereof, of a nitrogenous manure compound, preferably urea, provides a manure which, as brought to solution, has an acid pH (3.5 ÷ 5.5 depending on the embodiments thereof), thereby reducing the ammonia volatilization nitrogen loss, and reducing to a minimum the manure aggressiveness for seeds, young roots and leave apparatus of the processed plants (a phytotoxicity less than that of other nitrogenous manures).
- The inclusion of several derivative materials or gallic and elagic acid residues, which are present in the inventive organic extracts, tends to reduce the nitrification process speed in a first application step, after applying the nitrogenous manure to soil, and this contributes to characterizing this manure compound as a slow release nitrogenous manure, with respect to the same nitrogenous components, and, preferably, with respect to urea, and solutions or suspensions thereof, as distributed as such.

- The acidity of tannin and non-tannin organic extracts according to the invention, together with a consistent presence of functional groups (hydroxyl, carboxyl and so on groups), having a complexing action, and derived from simple organic acids and sugar and phenol acids, from free aminoacids and other compounds characteristic of the wood biomass (such as organic phosphates, phytic acid and so on) will contribute to hold in a soluble form, and accordingly easily assimilable by plants, all the main microelements(with the exception of molybdenum).
- The presence of "non-tannin substances" in the subject organic extracts, will improve the soil microbiologic activity and, more generally, the nourishing of plants and composition of the biomass thereof.

The following Examples will be disclosed only as illustrative of the present invention, and they must not be intended as limitative of the scope thereof, which is defined by the accompanying claims.

### EXAMPLE 1

The tannin and non-tannin organic extract according to the present invention has been used for reducing the irrigation water pH (i.e. of the acidifying test water of Table 1) distributed in a microirrigation application to a Virginia Bright cultivar K326 tobacco cultivation or crop.

30 1 of an aqueous 3% s.s. solution have been pnce added to 1m³ water and distributed through three microirrigation operations, in the active tobacco growth period (between 40 and 80 days from transplantation).

Upon processing, the tobacco crop has shown, with respect to a non processed sample, an advanced leaf ripening, thereby providing, at a quantitative-qualitative level, the best productive results.

Of great interest is an observed reduction of the total nitrogen/nicotine ratio of processed tobacco: the excess absorbed N, with respect to the capability of plants of transforming it to nicotine, can, actually, cause an accumulation of inorganic nitrogen which, in turn, would be responsible of the carcinogen nitrosamine and anomalous aroma formations.

**Table 3 - Production results obtained on Virginia Bright tobacco by using acidifying solutions prepared from tannin and non-tannin organic extracts according to the invention.**

| **CHARACTERISTIC** | **CONTROL** | **PROCESSED** |
|---|---|---|
| Days from transplantation to flowering | 92 | 87 |
| Length of the largest leaf at flowering (cm) | 53 | 56 |
| Cured leaf yield (kg/ha) | 2880 | 2960 |
| Quality (classification score 0-10, with 10 being the best) | 6.58 | 7.83 |

| Analytic characteristics of the middle leafs (% s.s.): | | |
|---|---|---|
| -Total nitrogen (N) | 4.25 | 3.98 |
| -Nicotine | 2.49 | 2.81 |
| -Reducing sugars | 12.15 | 14.77 |
| -Total phosphorus (P) | 0.33 | 0.39 |
| -Total potassium (K) | 2.20 | 2.38 |

### EXAMPLE 2

By mixing in a mixing apparatus, a biammonium phosphate (33% w/w) and powder urea (52% w/w) with 13% (w/w) dried powder organic extracts according to the invention is prepared.

The obtained dry mixture is granulated by compacting it after having added 1.8% (w/w) of a powder urea-formaldehyde resin at 29% (w/w) nitrogen and 0.2% (w/w) water.

The obtained manure compound, having contents of nitrogen (N) of 30% (w/w) and of P₂O₅ of about 15% (w/w) is used for fertilizing cultivations, in soil applications.

### EXAMPLE 3

By mixing in a rotary drum mixing apparatus, a coated manure compound, obtained from granular urea (92% w/w), 5% (w/w) dried powder powder organic extracts according to the invention, 2.8% (w/w) of an urea-formaldehyde resin at 29% (w/w) nitrogen and 0.2% (w/w) water is prepared.

The obtained manure compound, having nitrogen (N) contents of 43% (w/w) is used for fertilizing cultivations, in soil applications.

### EXAMPLE 4

By stirring at a temperature of 40 ÷ 60°C, a liquid solution manure compound having nitrogen (N) contents of 29% (w/w) starting from urea (45% w/w) and from a concentrated material (55% w/w) having dry contents of preferably 5% ÷ 10% is prepared.

This manure compound is used for fertilizing cultivations, as applied both to the soil and to the leafs.

### EXAMPLE 5

The manure compound of Example 4 has been evaluated, with respect to the nitrogen releasing properties thereof, according to a modified Stanford and Smith method.

The test has been performed at the "Dipartimento di Agronomia e Gestione dell'Agroeco-sistema dell'Università di Pisa (Italy)".

From the results collected in the thereinbelow figure, it should be apparent that after 56 days from the start of the experiment, about 80% nitrogen contained in urea was mineralized, and present in a nitric form in percolating waters, whereas, in the same period, less than 50% of nitrogen of the manure compound of the Example 4 was mineralized.

Accordingly, it should be apparent that the manure compound of Example 4 provides a nitrogen release slower than that of urea.

### Mineralized N (soil)

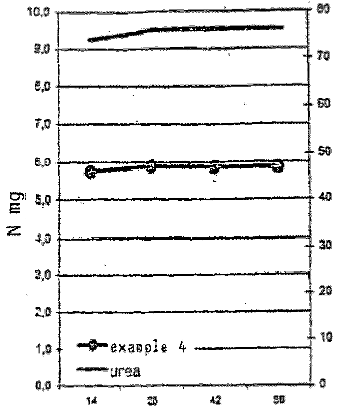

### incubation period (days)

### EXAMPLE 6

The manure compounds of Examples 4 and 9 have been compared with urea and a non processed sample in an evaluating test for evaluating the protective action on the soil pH and the fertilizing effect on a vat lettuce cultivation, at the "Dipartimento di Agronomia e Gestione dell'Agroeco-sistema".

The manure compounds have been used at N doses corresponding to 100, 200 and 300 kg/Ha, and the administering effect of two different irrigation water types (i.e. an artificially salted water and a non-salted water) has been also evaluated.

The results are to be further evaluated; however, with respect to the evolvement of soil pH, under salinity conditions, it is possible to state that the inventive manure compounds provide, in the time, an increase of the soil pH, than that of urea.

The productive results recorded during the cultivation biologic cycle are being evaluated.

Anyhow, during a commercial collection, the productions, as expressed as fresh weight, have been found to be analogous, with the exception of the product of Example 9, which provided a small yield increase as it was applied at the highest doses (in + 5% average).

This effect, however, is less evident in tests performed with salt water irrigations (only + 2%).

In each case, the product of Example 9 provided the plants with a more luxurious aspect and an intenser green color, in addition to a greater preservability.

### EXAMPLE 7

Under stirring and at a temperature of 40 ÷ 60°C, a liquid suspension manure containing 20.5% (w/w) nitrogen (N) is prepared, starting from the inventive organic extract (48% w/w), preferably with a dry residue from 5 ÷ 10%, and from: urea (30% w/w), ammonium nitrate (20% w/w) and attapulgite (2% w/w).

This manure compound can be used for fertilizing cultivations, as applied to the soil.

### EXAMPLE 8

The manure compound of Example 4 has been evaluated on hard wheat, with respect to the ammonium nitrate calcium at 26% N (CAN) with the same nitrogen doses (100 kg/ha) and applying period (at the start of bunching).

The test has been performed at Grosseto (Middle Italy), and has been performed by the "Dipartimento di Agronomia e Gestione dell'Agroeco-sistema dell'Università di Pisa".

The full production results are yet to be determined and processed.

However, the dry weight of culms (entire part of the plant above ground) was 4.49 t/ha for the inventive manure compound, with respect to a value of 4.26 t/ha for CAN.

The weight of 1000 carioxides was 42.58 and 40,42 g, respectively.

### EXAMPLE 9

A liquid manure compound based on an organic extract of tannin and non-tannin substances according to the invention, with s.s. contents of 5% (63% w/w), urea (22% w/w) and heptahydrate ferrous sulphate (15% w/w) with end nitrogen contents of 10% and end iron contents (Fe) of about 3% has been prepared.

This product can be used for fertilizing cultivations having high demands of nitrogen and iron, such as grass surfaces, in a pre and post implantation, and even in fert-irrigation too.

### EXAMPLE 10

A magnesium and microelement (B, Cu, Fe, Mn, Mo and Zn) based manure compound is prepared by mixing, with a tannin and non-tannin dried organic extract according to the present invention (32% w/w) the following materials: heptahydrate magnesium sulphate (18.9 w/w), heptahydrate ferrous sulphate (20% w/w), sodium octoborate (6% w/w), pentahydrate copper sulphate (2% w/w), monohydrate manganese sulphate (9% w/w), monohydrate zinc sulphate (3% w/w), and sodium molybdate (0.1% w/w).

The product, dissolved in water in a ratio of 50 ÷ 100g/100 1 is used for correcting yellowing and multiple deficient status.

### EXAMPLE 11

A liquid manure compound based on a tannin and non-tannin organic extract according to the present invention, with s.s. contents of 3% (70% w/w) and heptahydrate ferrous sulphate (30% w/w) with a Fe contents of about 6% is prepared.

The product is used for correcting an iron lacking or deficient status of cultivations as applied to the soil, in fert-irrigation too.

### EXAMPLE 12

The product of Example 11 has been used for correcting an iron deficient status recorded on cultivar Abate pear on BA29, grown on a lime-calcareous soil.

The product has been distributed in fertiirrigation in an amount of 1000 l/ha split into three application operations, each combined to the application of 15 m³ irrigation water, in a period from half June 2002 each 15 days.

The comparing has been performed with a sample processed by a Fe (EDDHA) chelate with a dosis of 12 kg/ha, which has been subjected to the same operations (three times fractioned distributions, at the same period, with the same application procedure).

A like leaf reviving effect has been obtained.

Moreover, the fruits of the plants processed by the product of Example 11 have provided a greater flavor and aroma of the pulp at panel test, longer shelf-life (+ 18 days, compared with sample, at room temperature), better refrigerator preservability (incidence of softening at 60 days from harvest: -16% compared with sample).

## Claims

1. A method for preparing a highly efficient and weakly polluting manure composition for biologic agriculture, said method comprising the steps of providing an organic extract, in a liquid or in a solid form obtainable by drying the organic extract, said organic extract being a natural product obtainable by water leaching wood without using solvents or other chemical substances and by subsequently cold concentrating the leached substances, said organic extract comprising tannin and non-tannin substances, said non-tannin substances comprising sugars, organic acids, salts and microelements with a weight ratio of (5-0.6):1 between the amount of said tannin and the amount of said non-tannin substances and a dry contents from 3 to 50%, said organic extracts having a pH value from 3 to 4 to prevent a progressive alkalinisation of a ground said manure composition being repeatedly applied to, the manure composition being obtained by mixing with said organic extract a manure compound, wherein said manure compound comprises microelements, both in a solid and in a liquid form.

2. A method according to claim 1, **characterized in that** said microelements comprise boron, cobalt, copper, iron, manganese, molybdenum, selenium and zinc, which are present individually or as any mixture thereof.

3. A method according to claims 1 or 2, **characterized in that** said microelements, preferably cationic microelements, are selected among Cu, Fe, Mn and Zn.

4. A method according to claim 1, **characterized in that** said manure composition is prepared by mixing 32% w/w of a said organic extract, 18.9% w/w heptahydrate magnesium sulphate, 29% w/w heptahydrate ferrous sulphate, 6% w/w sodium octoborate, 2% w/w pentahydrate copper sulphate, 9% w/w monohydrate manganese sulphate, 3% w/w monohydrate zinc sulphate and 0.1% w/w sodium molybdate, dissolving in water in a ratio from 50 to 100g/100l the thus obtained mixture to provide a Mg, B, Cu, Fe, Mn, Mo and Zn microelement containing liquid manure composition.

5. A method according to claim 1, **characterized in that** said method comprises the further step of adding to said highly efficient weakly polluting manure composition additional plant nourishing elements, including urea, ammonium sulphate and nitrate and urea-formaldehyde polymers.

6. A method according to claim 1, **characterized in that** said method further comprises the step of adding to said highly efficient weakly polluting manure composition additional phosphorus, potassium, sulphur, magnesium, calcium, boron, cobalt, copper, iron, manganese, molybdenum, selenium and zinc either individually or in any mixtures thereof.

7. A method according to claim 1, **characterized in that** said organic extract contains amounts variable from 1 to 20% w/w of said non tannin substances.

8. A method according to claim 1, **characterized in that** the concentration of said tannin substances varies from 1 to 75%.

9. A method for improving the nourishing of plants and composition of the biomass thereof, said method comprising the steps of providing an organic extract, in a liquid or in a solid form obtainable by drying the organic extract, said organic extract being a natural product obtainable by water leaching wood without using solvents or other chemical substances and by subsequently cold concentrating the leached substances, said organic extract comprising tannin and non-tannin substances, said non-tannin substances comprising sugars, organic acids, salts and microelements with a weight ratio of (5-0.6):1 between the amount of said tannin and the amount of said non-tannin substances and a dry contents from 3 to 50%, said organic extracts having a pH value from 3 to 4 to prevent a progressive alkalinisation of a ground said organic extract being repeatedly applied to.

10. A method according to claim 7, **characterized in that** said organic extract contains amounts variable from 1 to 20% w/w of said non tannin substances.

11. A method according to claim 7, **characterized in that** the concentration of said tannin substances varies from 1 to 75%.
